# EUROPEAN PATENT SPECIFICATION

(11) **EP 2 552 141 B1**
(45) Date of publication and mention of the grant of the patent: **13.11.2019**
(21) Application number: 12177975.5
(22) Date of filing: 26.07.2012
(51) Int. Cl.: H04W 12/02, H04L 29/06, H04L 12/22

(54) **METHOD FOR TRACKING WIRELESS COMMUNICATION TERMINALS USING APPLICATION-LAYER IDENTIFIER CORRELATION**
VERFAHREN ZUR VERFOLGUNG DRAHTLOSER KOMMUNIKATIONSENDGERÄTE MIT ANWENDERSCHICHTIDENTIFIZIERERKORRELATION
PROCÉDÉ POUR SUIVRE DES TERMINAUX DE COMMUNICATION SANS FIL UTILISANT UNE CORRÉLATION D'IDENTIFICATEUR DE COUCHE D'APPLICATION

(30) Priority: 27.07.2011 IL 21430511
(43) Date of publication of application: 30.01.2013
(73) Proprietor: Verint Systems Limited, Pituach (IL)
(72) Inventor: Goldfarb, Eithan, 74057 Ness Ziona (IL); Nelkenbaum, Yossi, 52441 Ramat - Gan (IL)
(74) Representative: Goddard, Frances Anna

(56) References cited:
- WO-A1-2007/105193
- MEYER U ET AL: "On the impact of GSM encryption and man-in-the-middle attacks on the security of interoperating GSM/UMTS networks", PERSONAL, INDOOR AND MOBILE RADIO COMMUNICATIONS, 2004. PIMRC 2004. 15 TH IEEE INTERNATIONAL SYMPOSIUM ON BARCELONA, SPAIN 5-8 SEPT. 2004, PISCATAWAY, NJ, USA,IEEE, PISCATAWAY, NJ, USA, vol. 4, 5 September 2004 (2004-09-05), pages 2876-2883, XP010754461, DOI: 10.1109/PIMRC.2004.1368846 ISBN: 978-0-7803-8523-8

## Description

### FIELD OF THE DISCLOSURE

The present disclosure relates generally to secure communication, and particularly to methods and systems for inspection of encrypted communication.

### BACKGROUND OF THE DISCLOSURE

Wireless communication terminals that communicate over wireless networks often exchange various types of identifiers. Some identifiers, such as International Mobile Subscriber Identity (IMSI), International Mobile Equipment Identity (IMEI) or Mobile Subscriber Integrated Services Digital Network Number (MSISDN), identify the terminal. Other identifiers may comprise application-layer identifiers such as e-mail addresses. Example communication techniques that use identifiers are described in U.S. Patent Application Publication 2008/0130898.

WO2007/105193 discloses a target specific interception method, for an identified target, communication for platforms which might be used by the target can be intercepted. The system uses interception criteria specific to the target and analyses the captured communications.

### SUMMARY OF THE DISCLOSURE

An embodiment that is described herein provides a method including soliciting a wireless communication terminal served by a wireless communication network to communicate with a trap base station, thereby causing data exchanged between the terminal and the communication network to be relayed via the trap base station. At least one application-layer identifier, which identifies a user of the solicited terminal, is extracted from the data relayed via the trap base station. Subsequent solicitation of wireless communication terminals by the trap base station is controlled based on the application-layer identifier.

In some embodiments, controlling the subsequent solicitation includes extracting from the data relayed via the trap base station a terminal identifier of the terminal, determining a correlation between the terminal identifier and the application-layer identifier, and controlling the subsequent solicitation based on the correlation. In an embodiment, determining the correlation includes identifying, based on the user identifier, that the terminal is operated by a known target user.

In a disclosed embodiment, the data relayed via the trap base station is encrypted using a transport-layer cryptographic protocol, and extracting the application-layer identifier includes decrypting the transport-layer cryptographic protocol. In an embodiment, the data includes Internet Protocol (IP) traffic, and the transport-layer cryptographic protocol includes one of a Secure Socket Layer (SSL) protocol and a Transport Layer Security (TLS) protocol. In an example embodiment, soliciting the terminal includes decrypting link-layer encryption that is used between the terminal and the wireless communication network in addition to the transport-layer cryptographic protocol.

Typically, the trap base station is detached from terrestrial infrastructure of the wireless communication network. In some embodiments, the method includes extracting from the data relayed via the trap base station a geographical location of the terminal that is reported by the terminal, and acting upon the reported location.

There is additionally provided, in accordance with an embodiment that is described herein, apparatus including an interception unit and a processor. The interception unit is configured to solicit a wireless communication terminal served by a wireless communication network to communicate with the apparatus, thereby causing data exchanged between the terminal and the communication network to be relayed via the apparatus. The processor is configured to extract from the data relayed via the trap base station at least one application-layer identifier that identifies a user of the solicited terminal, and to control subsequent solicitation of wireless communication terminals by the trap base station based on the application-layer identifier.

The present disclosure will be more fully understood from the following detailed description of the embodiments thereof, taken together with the drawings in which:

### BRIEF DESCRIPTION OF THE DRAWINGS

Fig. 1 is a block diagram that schematically illustrates a communication network and a trap base station, in accordance with an embodiment that is described herein; and
Fig. 2 is a flow chart that schematically illustrates a method for inspecting encrypted Internet Protocol (IP) traffic of wireless communication terminals, in accordance with an embodiment that is described herein.

### DETAILED DESCRIPTION OF EMBODIMENTS

### OVERVIEW

When intercepting off-the-air communication of wireless communication terminals, it is typically possible to extract identifiers of the intercepted terminals, such as IMSI, IMEI or MSISDN. In many real-life scenarios, however, it is difficult to associate the terminals with known target users based on such identifiers. A target user, for example, may operate a terminal that is used for the first time or a new prepaid Subscriber Identity Module (SIM). In such scenarios, terminal identifiers that are extracted from the intercepted communication, such as IMSI, IMEI or MSISDN, may not be recognized as correlated with a target user.

Embodiments that are described herein provide improved methods and systems for interception. The disclosed techniques extract from the intercepted communication application-layer identifiers that, e.g., e-mail addresses or Facebook identities, which are indicative of the users of the terminals. By correlating the terminal identifiers with the application identifiers, it is possible to identify which terminals are operated by known target users. Subsequent tracking of terminals is controlled based on this identification.

In some embodiments, interception is carried out by a trap base station that is detached and separate from the network. The trap base station solicits the terminal to communicate by masquerading as a legitimate base station of the wireless communication network. Once the terminal is solicited, the data exchanged between the terminal and the network is relayed via the trap base station.

In an embodiment, the relayed data comprises IP traffic that is exchanged between the terminal and the network. The trap base station extracts from the IP traffic at least one application-layer identifier that is indicative of the terminal's user, e.g.' an e-mail address or a Facebook identity. The trap base station controls subsequent solicitation of terminals based on the application-layer identifier. For example, the trap base station may correlate the application-layer identifier with terminal identifiers. Using this correlation, the trap base station is able to identify which terminals are likely to be operated by target users. The identified terminals can then be tracked.

In many cases the IP traffic relayed via the trap base station is encrypted using a transport-layer cryptographic protocol. For example, the terminal may transmit and receive IP traffic that is encrypted in accordance with the Secure Socket Layer (SSL) or Transport Layer Security(TLS) protocol. TLS is specified by the Internet Engineering Task Force (IETF) inRFC 5246, entitled "The Transport Layer Security (TLS) Protocol Version 1.2," August, 2008, Transport-layer encryption is typically applied end-to-end between the source and destination of the data, as distinguished from link-layer encryption that may be applied by the wireless communication protocol between the terminal and its
serving base station. In many cases, both types of encryption are applied, one on top of the other.

In some embodiments, the trap base station applies "Man in The Middle" (MITM) techniques to decrypt the transport-layer encryption, and extracts application-layer identifiers from the decrypted data. The terminal user is typically unaware of the entire solicitation, relaying and decryption process.

### SYSTEM DESCRIPTION

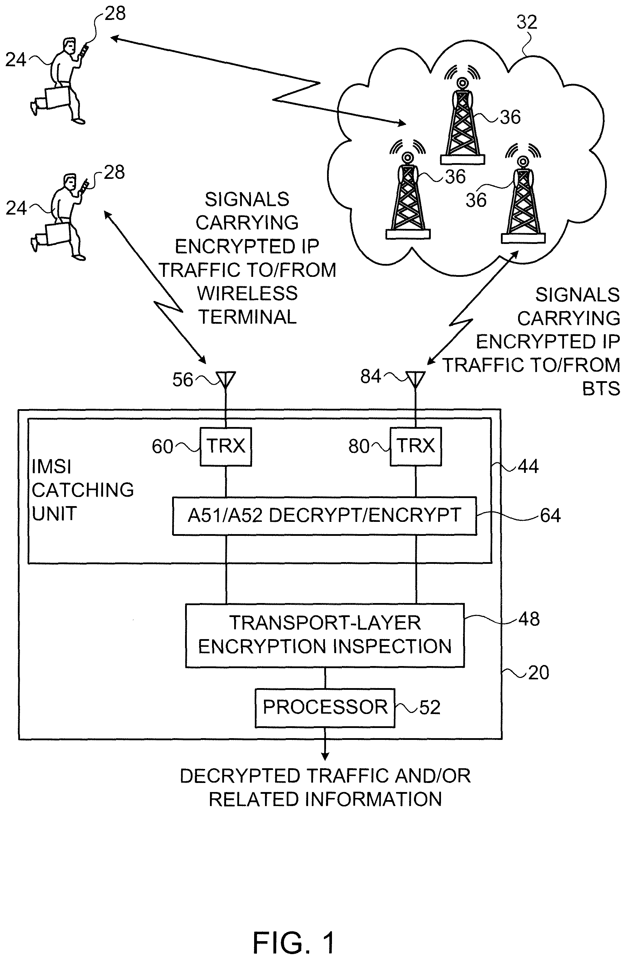

Fig. 1 is a block diagram that schematically illustrates a trap base station (BTS) 20, in accordance with an embodiment that is described herein. Trap base station 20 is used for intercepting and decoding communication of wireless communication terminals 28, which are operated by users 24 and communicate over a wireless communication network 32. Trap base stations of this sort may be operated, for example, by law enforcement or intelligence agencies for tracking suspect users or for any other purpose.

Trap base station 20 differs from base stations 36 of network 32 in several aspects. The trap base station is typically detached from the terrestrial infrastructure, e.g., backhaul and switching infrastructure, of network 32. Moreover, the trap base station is typically not defined as part of network 32, and the service provider of network 32 may be unaware of its existence.

Terminals 28 may comprise, for example, cellular phones, wireless-enabled mobile computers or Personal Digital Assistants (PDAs), or any other suitable type of communication terminals. In one example embodiment, one or more terminals 28 comprise mobile computers equipped with Global System for Mobile communication (GSM) data cards. Network 32 may comprise, for example, a cellular network such as a Global System for Mobile communication (GSM) or Universal Mobile Telecommunications System (UMTS) network, or any other suitable network type. In the present example, network 32 comprises a cellular network that comprises multiple base stations 36 with which terminals 28 communicate.

In some cases, terminals 28 transmit and receive data using a cryptographic transport-layer protocol. The terms "cryptographic transport-layer protocol" and "transport-layer encryption" are used interchangeably herein and refer to any type of encryption that is applied to the data at or above the transport layer. The encryption scheme of such protocols typically comprises public-key encryption. Examples of cryptographic transport-layer protocols are SSL and TLS, which are used for encryption Internet Protocol (IP) traffic. As another example, application-layer protocols that apply encryption are also regarded herein as cryptographic transport-layer protocol. Examples of such protocols are HTTPS that is often used for browsing applications, and SSL-POP/SSL-IMAP/SSL-SMTP that are sometimes used for e-mail applications. Additionally or alternatively, encrypted protocols can be used also for Internet faxing, instant messaging, Voice-Over-IP (VoIP) or for any other suitable application or type of data transfer.

Transport-layer encryption should be distinguished from encryption that is applied over the wireless segment of network 32, i.e., between a given terminal 28 and the base station that serves it. For example, a GSM network may apply A51/A52 encryption to the data between the terminal and the base station. As another example, GSM General Packet Radio Service (GPRS) channels use encryption schemes called GEA1, GEA2 and GEA3. In some cases the data is initially encrypted using SSL by the data source (terminal 28 or the party with which the terminal communicates), and then with A51/A52 or GEA1/GEA2/GEA3 by the terminal or serving base station before transmission over the wireless medium.

Trap base station 20 intercepts and decodes the communication of selected terminals 28. In particular, when the data is encrypted using a cryptographic transport-layer protocol, the trap base station identifies this fact and decrypts the transport-layer encryption.

Typically, the trap base station impersonates a legitimate base station of network 32, and solicits a given terminal 28 to communicate. For example, the trap base station may transmit downlink signals using transmission parameters of a legitimate base station, and at a high transmit power that causes the terminal to receive the trap base station as the strongest base station. In such a situation, the terminal is likely to switch from its serving base station to the trap base station. This type of operation is sometimes referred to as "IMSI catching," since it is sometimes used for obtaining the terminal's International Mobile Station Identifier (IMSI).

IMSI catching techniques are described, for example, by Strobel in "IMSI Catcher," July 13, 2007, by Asokan et al., in "Man-in-the-Middle Attacks in Tunneled Authentication protocols," the 2003 Security Protocols Workshop, Cambridge, UK, April 2-4, 2003, and by Meyer and Wetzel in "On the Impact of GSM Encryption and Man-in-the-Middle Attacks on the Security of Interoperating GSM/UMTS Networks," proceedings of the 15th IEEE International Symposium on Personal, Indoor and Mobile Radio Communications, Barcelona, Spain, September 5-8, 2004, pages 2876-2883, Any of these techniques, or any other suitable technique, can be used by trap base station 20 to solicit terminals 28 to communicate with the trap base station.

Having solicited a given terminal 28 to communicate, trap base station 20 establishes a relayed communication path, or detour communication path, between the solicited terminal and network 32. Typically, the trap base station impersonates a base station vis-a-vis the solicited terminal, and impersonates a terminal vis-a-vis one of the legitimate base stations 36. The communication between the terminal and the legitimate base station is then relayed via the trap base station.

The trap base station decodes the relayed communication in order to extract the transferred data and/or other information. For example, the trap base station may extract an identifier (e.g., IMSI) of the terminal, determine the terminal's location or extract any other suitable information from the relayed data. The extracted data and/or other information may be presented to an operator, recorded for later analysis or used in any other suitable way. In some embodiments, trap base station 20 may modify or otherwise control the relayed data. Terminal 28, user 24 and network 32 are typically unaware of the entire interception process.

In the example of Fig. 1, trap base station 20 comprises an IMSI catching unit 44, which carries out the above-described process of soliciting terminals and establishing relayed communication paths with network 32. Unit 44 is also referred to herein as an interception unit. The trap base station further comprises an inspection unit 48, which identifies transmissions that use cryptographic transport-layer protocols and decrypts and re-encrypts the transport-layer encryption. A processor 52 manages the operation of the trap base station, e.g., controls units 44 and 48 and handles the operator interface or interfaces with other systems.

In the example of Fig. 1, IMSI catching unit 44 comprises a terminal-side transceiver (TRX) 60, which establishes communication with solicited terminals 28 via a terminal-side antenna 56. A network-side TRX 80 establishes communication with one or more base stations 36 of network 32, via a network-side antenna 84. Using these two TRXs, the trap base station sets up relayed communication paths between the solicited terminals and respective base stations 36 in network 32. An A51/A52 unit 64 decrypts and re-encrypts A51/A52 encryption that may be applied by the wireless network or terminal. The A51/A52 decryption and re-encryption may be applied in any or both directions, i.e., from the terminal toward the base station and/or from the base station toward the terminal.

In some embodiments, inspection unit 48 examines the data that is transferred between the terminal and the base station (after A51/A52 decryption if one is used). Unit 48 identifies whether the data is encrypted in accordance with a cryptographic transport-layer protocol, e.g., SSL or TLS. When such a protocol is identified, unit 48 decrypts the transport-layer encryption so as to produce unencrypted data. The unencrypted data is provided to processor 52 for further processing. Unit 48 re-encrypts the data with the applicable transport-layer encryption and sends the re-encrypted data to IMSI catching unit 44 for transmission. This process may be applied in both directions, i.e., from the terminal toward the base station and/or from the base station toward the terminal.

Inspection unit 48 may use various techniques for decrypting and re-encrypting the transport-layer encryption. In some embodiments, the transport-layer encryption comprises a public-key encryption scheme in which one end of the link provides a security certificate to the other end. In some embodiments, unit 48 replaces the certificate of the solicited terminal 28 or of the opposite end of the encrypted link with a substitute certificate, and is therefore able to decrypt the transport-layer encryption. Processes of this sort are sometimes referred to as SSL Man in The Middle (SSL MITM) and are described, for example, by Soghoian and Stamm, in "Certified Lies: Detecting and Defeating Government Interception Attacks Against SSL," April, 2010

When using SSL MITM, unit 48 typically intervenes in SSL sessions as they are established or negotiated between the solicited terminal and SSL server. In the connection process, unit 48 transparently establishes two SSL sessions: One between itself and the terminal and another between itself and the SSL server. Each SSL session terminates at unit 48. Nevertheless, unit 48 ensures that the TCP connection between the terminal and the SSL server remains intact and valid and the TCP ACK loop continues to operate between the terminal and server. Terminating and re-originating SSL sessions allows unit 48 to extract the data from the encrypted payload and send it on to processor 52. The SSL MITM technique typically does not involve any network identifiers on its own (e.g., IP address or MAC address), and therefore it is undetectable by the terminal user.

Example inspection techniques that use substitute certificates are offered, for example, by Blue Coat Systems (Sunnyvale, California), and by Check Point Software Technologies (Tel Aviv, Israel). Example inspection solutions that are produced by Netronome Systems, Inc. (Cranberry Twp., Pennsylvania) are described in "Examining SSL-Encrypted Communications - Netronome SSL Inspector™ Solution Overview," February, 2010, which is incorporated herein by reference. SSL inspection products are also offered by Packet Forensics, Inc. (Tempe, Arizona). Unit 48 may use any of these techniques, or any other suitable technique.

Thus, processor 52 is provided with unencrypted data that is extracted from the communication exchanged between the solicited terminals and network 32. Processor 52 may perform any desired action based on the extracted data. For example, the processor may present the data to an operator or output the data to another system for analysis or storage. The processor may issue an alert based on the data. Additionally or alternatively, processor 52 may extract information regarding the terminal or its user from the unencrypted data, e.g., an IMSI or other identifier of the terminal.

As another example, processor 52 may extract the terminal's geographical location from the data. In an example embodiment, processor 52 identifies that the data is exchanged as part of a data application in which the terminal reports its geographical location. For example, processor 52 may identify that the terminal uses a mapping or navigation application. In this sort of application, the terminal typically reports its geographical location to a server with high accuracy, e.g., based on an internal GPS receiver in the terminal or according to a Wi-Fi hotspot to which the terminal is connected. Processor 52 may extract these location reports from the intercepted data and thus obtain highly-accurate location coordinates of the terminal. This sort of technique can be used, for example, to apprehend a suspect user in real time.

In some embodiments, inspection unit 48 provides feedback to IMSI catching unit 44 in order to improve interception performance. In other words, subsequent solicitation of terminals 28 is controlled based on the decrypted data of previously-solicited terminals. In an example scenario, IMSI catching unit 44 may intercept a terminal whose IMSI or phone number is not recognized. For example, the terminal may have a prepaid Subscriber Identity Module (SIM) that is used for the first time. After decrypting the transport-layer encryption by unit 48, processor 52 may find in the unencrypted data indications as to the identity of the terminal or its user. For example, the data may contain one or more application-layer identifiers of the terminal's user (e.g., e-mail address or Facebook identity) that are known to be associated with a known target user.

In other words, by analyzing the unencrypted data, processor 52 of trap base station 20 is able to correlate identifiers of the terminal that are extracted by IMSI catching unit 44 (e.g., IMSI, IMEI or MSISDN) with application-layer identifiers of the terminal's user. Using this correlation, processor 52 can identify which terminal is operated by a known target user, even if the terminal identifiers are not previously recognized. The trap base station may thus add the previously-unrecognized terminal to a list of potential targets that should be intercepted. As noted above, this sort of process can be applied to various types of terminals, e.g., to mobile computers equipped with GSM data cards, whose correlation with target users would have been difficult or impossible otherwise.

In alternative embodiments, processor 52 may control subsequent solicitation of terminals 52 based on any information that is extracted from the data after decryption of the transport-layer encryption. Subsequent solicitation may be controlled based on, for example, the terminal's identifiers or geographical location.

The configuration of trap base station 20 shown in Fig. 1 is an example configuration, which is chosen purely for the sake of conceptual clarity. In alternative embodiments, any other suitable trap base station configuration can also be used. Some elements of trap base station 20 may be implemented in hardware, e.g., in one or more Application-Specific Integrated Circuits (ASICs) or Field-Programmable Gate Arrays (FPGAs). Additionally or alternatively, some trap base station elements can be implemented using software, or using a combination of hardware and software elements.

Typically, processor 52 comprises a general-purpose processor, which is programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

### INTERCEPTION METHOD DESCRIPTION

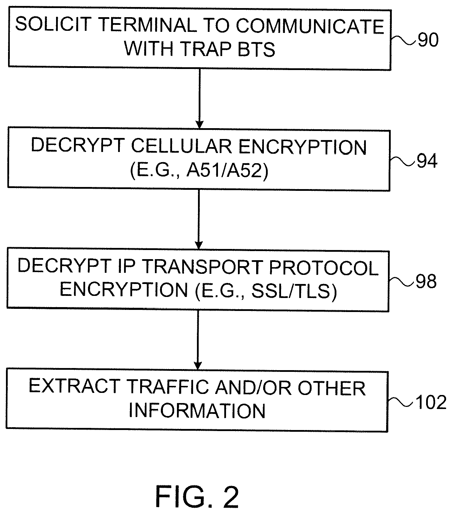

Fig. 2 is a flow chart that schematically illustrates a method for inspecting encrypted IP traffic of wireless communication terminals 28, in accordance with an embodiment that is described herein. The method begins with trap base station 20 soliciting a given terminal 28 to communicate, at a solicitation step 90. The trap base station sets-up a detour communication path between the solicited terminal and a base station 36 in network 32, as explained above.

Unit 64 in the trap base station decrypts cellular-level encryption (e.g., A51/A52) that may be used for communicating with the terminal in wireless network 32, at a cellular decryption step 94. Inspection unit 48 decrypts transport-layer encryption that may be used for communicating with the terminal, at a transport-layer decryption step 98. Typically, unit 48 identifies that the terminal communicates using a cryptographic transport-layer protocol and, once identified, decrypts the transport-layer encryption. Processor 52 extracts user data and/or other information of interest from the unencrypted data that is provided by unit 48, at a data extraction step 102.

Processor 52 controls subsequent solicitation of terminals 52 by the trap base station based on the decrypted data. For example, as explained above, processor 52 may correlate one or more identifiers of the terminal with one or more application-layer identifiers of the terminal's user that are extracted from the
decrypted data. The correlation is then used for subsequent tracking of terminals. For example, the trap base station may track terminals that are identified (using the above-described correlation technique) as belonging to known target users.

It will be appreciated that the embodiments described above are cited by way of example, and that the present invention is defined by the claims.

## Claims

1. A method, comprising:
soliciting a wireless communication terminal served by a wireless communication network to communicate with a legitimate base station, thereby causing data exchanged between the terminal and the communication network to be relayed via the legitimate base station,
providing a trap base station to intercept communication from the wireless communication terminal, wherein the trap base station is detached and separate from the network, wherein the trap base station transmits downlink signals at a relatively high power as compared to the base station to solicit the terminal to communicate to the trap base station by masquerading as a legitimate base station of the wireless communication network;
extracting, by the trap base station, from the data relayed via the trap base station at least one application-layer identifier that identifies a user of the solicited terminal;
controlling subsequent solicitation of wireless communication terminals by the trap base station based on the application-layer identifier; and
the trap base station modifying the data before relaying the data to the legitimate base station.

2. The method according to claim 1, wherein controlling the subsequent solicitation comprises extracting from the data relayed via the trap base station a terminal identifier of the terminal, determining a correlation between the terminal identifier and the application-layer identifier, and
controlling the subsequent solicitation based on the correlation.

3. The method according to claim 2, wherein determining the correlation comprises identifying, based on the user identifier, that the terminal is operated by a known target user.

4. The method according to claim 1, wherein the data relayed via the trap base station is encrypted using a transport-layer cryptographic protocol, and wherein extracting the application-layer identifier comprises decrypting the transport-layer cryptographic protocol.

5. The method according to claim 4, wherein the data comprises Internet Protocol (IP) traffic, and wherein the transport-layer cryptographic protocol comprises one of a Secure Socket Layer (SSL) protocol and a Transport Layer Security (TLS) protocol.

6. The method according to claim 4, wherein soliciting the terminal comprises decrypting link-layer encryption that is used between the terminal and the wireless communication network in addition to the transport-layer cryptographic protocol.

7. The method according to claim 1, wherein the trap base station is detached from terrestrial infrastructure of the wireless communication network.

8. The method according to claim 1, and comprising extracting from the data relayed via the trap base station a geographical
location of the terminal that is reported by the terminal, and acting upon the reported location.

## Patentansprüche

1. Verfahren, umfassend:
Auffordern eines Endgeräts für drahtlose Kommunikation, das von einem drahtlosen Kommunikationsnetzwerk bedient wird, mit einer legitimen Basisstation zu kommunizieren, wodurch bewirkt wird, dass Daten, die zwischen dem Endgerät und dem Kommunikationsnetzwerk ausgetauscht werden, über die legitime Basisstation weitergeleitet werden, wobei eine Trap-Basisstation bereitgestellt wird, um eine Kommunikation von dem Endgerät für drahtlose Kommunikation abzufangen, wobei die Trap-Basisstation von dem Netzwerk getrennt und separat ist, wobei die Trap-Basisstation Downlink-Signale mit einer verhältnismäßig hohen Leistung im Vergleich zu der Basisstation überträgt, um das Endgerät aufzufordern, durch Maskieren als eine legitime Basisstation des drahtlosen Kommunikationsnetzwerks an die Trap-Basisstation zu kommunizieren;
Extrahieren, durch die Trap-Basisstation, aus den Daten, die über die Trap-Basisstation weitergeleitet werden, von mindestens einem Anwendungsschichtidentifikator, der einen Benutzer des aufgeforderten Endgeräts identifiziert;
Steuern einer nachfolgenden Aufforderung von Endgeräten für drahtlose Kommunikation durch die Trap-Basisstation basierend auf dem Anwendungsschichtidentifikator; und
Ändern, durch die Trap-Basisstation, der Daten, bevor die Daten zu der legitimen Basisstation weitergeleitet werden.

2. Verfahren nach Anspruch 1, wobei das Steuern der nachfolgenden Aufforderung ein Extrahieren, aus den Daten, die über die Trap-Basisstation weitergeleitet werden, eines Endgerätidentifikators des Endgeräts, ein Bestimmen einer Korrelation zwischen dem Endgerätidentifikator und dem Anwendungsschichtidentifikator und ein Steuern der nachfolgenden Aufforderung basierend auf der Korrelation umfasst.

3. Verfahren nach Anspruch 2, wobei das Bestimmen der Korrelation ein Identifizieren, basierend auf dem Benutzeridentifikator, dass das Endgerät durch einen bekannten Zielbenutzer verwendet wird, umfasst.

4. Verfahren nach Anspruch 1, wobei die Daten, die über die Trap-Basisstation weitergeleitet werden, unter Verwendung eines kryptografischen Transportschichtprotokolls verschlüsselt werden und wobei das Extrahieren des Anwendungsschichtidentifikators ein Entschlüsseln des kryptografischen Transportschichtprotokolls umfasst.

5. Verfahren nach Anspruch 4, wobei die Daten Internetprotokolldatenverkehr (IP-Datenverkehr) umfassen und wobei das kryptografische Transportschichtprotokoll eines von einem Secure-Socket-Layer-Protokoll (SSL-Protokoll) und einem Transport-Layer-Security-Protokoll (TLS-Protokoll) umfasst.

6. Verfahren nach Anspruch 4, wobei das Auffordern des Endgeräts ein Entschlüsseln einer Verbindungsschichtverschlüsselung, die zwischen dem Endgerät und dem drahtlosen Kommunikationsnetzwerk zusätzlich zu dem kryptografischen Transportschichtprotokoll verwendet wird, umfasst.

7. Verfahren nach Anspruch 1, wobei die Trap-Basisstation von der terrestrischen Infrastruktur des drahtlosen Kommunikationsnetzwerks getrennt ist.

8. Verfahren nach Anspruch 1 und umfassend ein Extrahieren aus den Daten, die über die Trap-Basisstation weitergeleitet werden, einer geografischen Position des Endgeräts, die von dem Endgerät gemeldet wird, und ein Reagieren auf die gemeldete Position.

## Revendications

1. Procédé, comportant les étapes consistant à :
solliciter un terminal de communication sans fil desservi par un réseau de communication sans fil pour communiquer avec une station de base légitime, amenant ainsi des données échangées entre le terminal et le réseau de communication à être relayées via la station de base légitime, mettre en place une station de base piège pour intercepter une communication provenant du terminal de communication sans fil, la station de base piège étant détachée et distincte du réseau, la station de base piège émettant des signaux de liaison descendante à une puissance relativement élevée en comparaison de la station de base pour solliciter le terminal afin qu'il communique vers la station de base piège en prétendant être une station de base légitime du réseau de communication sans fil ;
faire extraire, par la station de base piège, des données relayées via la station de base piège au moins un identifiant de couche d'application qui identifie un utilisateur du terminal sollicité ;
commander une sollicitation ultérieure de terminaux de communication sans fil par la station de base piège d'après l'identifiant de couche d'application ; et
faire modifier les données par la station de base piège avant de relayer les données vers la station de base légitime.

2. Procédé selon la revendication 1, la commande de la sollicitation ultérieure comportant les étapes consistant à extraire des données relayées via la station de base piège un identifiant de terminal du terminal, à déterminer une corrélation entre l'identifiant de terminal et l'identifiant de couche d'application, et à commander la sollicitation ultérieure d'après la corrélation.

3. Procédé selon la revendication 2, la détermination de la corrélation comportant l'identification, d'après l'identifiant d'utilisateur, du fait que le terminal est exploité par un utilisateur cible connu.

4. Procédé selon la revendication 1, les données relayées via la station de base piège étant chiffrées à l'aide d'un protocole cryptographique de couche de transport, et l'extraction l'identifiant de couche d'application comportant le déchiffrement du protocole cryptographique de couche de transport.

5. Procédé selon la revendication 4, les données comportant un trafic de protocole Internet (IP), et le protocole cryptographique de couche de transport comportant soit un protocole de couche de connexion sécurisée (SSL), soit un protocole de sécurité de la couche de transport (TLS).

6. Procédé selon la revendication 4, la sollicitation du terminal comportant le déchiffrement d'un chiffrement de couche de liaison qui est utilisé entre le terminal et le réseau de communication sans fil en plus du protocole cryptographique de couche de transport.

7. Procédé selon la revendication 1, la station de base piège étant détachée d'une infrastructure terrestre du réseau de communication sans fil.

8. Procédé selon la revendication 1, et comportant les étapes consistant à extraire des données relayées via la station de base piège un emplacement géographique du terminal qui est signalé par le terminal, et à agir sur la base de l'emplacement signalé.
